# EUROPEAN PATENT SPECIFICATION

(11) **EP 0 689 352 B1**
(45) Date of publication and mention of the grant of the patent: **18.08.1999**
(21) Application number: 95304227.2
(22) Date of filing: 19.06.1995
(51) Int. Cl.: H04N 5/64, H04N 5/74

(54) **Rear projection type television receiver**
Fernsehempfänger mit Rückprojektion
Récepteur de télévision à projection par transparence

(30) Priority: 21.06.1994 JP 13869894
(43) Date of publication of application: 27.12.1995
(73) Proprietor: MATSUSHITA ELECTRIC INDUSTRIAL CO., LTD., Kadoma-shi, Osaka 571-0050 (JP)
(72) Inventor: Yamada, Tadayoshi, Toyono-gun, Osaka, 563-02 (JP); Gotou, Kazumi, Takatsuki-shi, Osaka 569 (JP); Tozuka, Masahiro, Takatsuki-shi, Osaka 569 (JP); Shimatani, Tsuyoshi, Kyoto-shi, Kyoto 612 (JP); Maeda, Yoshinobu, Katano-shi, Osaka 576 (JP)
(74) Representative: Crawford, Andrew Birkby

(56) References cited:
- EP-A- 0 523 427
- EP-A- 0 623 839
- EP-A- 0 650 295
- DE-U- 9 005 951
- US-A- 4 921 330
- US-A- 5 206 760

## Description

The present invention relates to a rear projection type television receiver for displaying an image projected on a rear side of a transmission type screen (hereinafter called screen). The rear projection type television receiver can be used either alone or in large-screen display composed of multiple units.

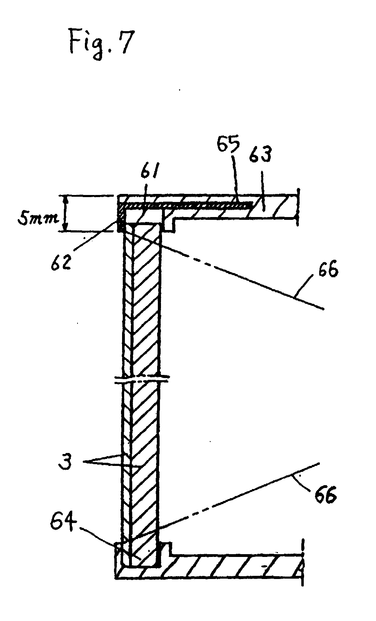

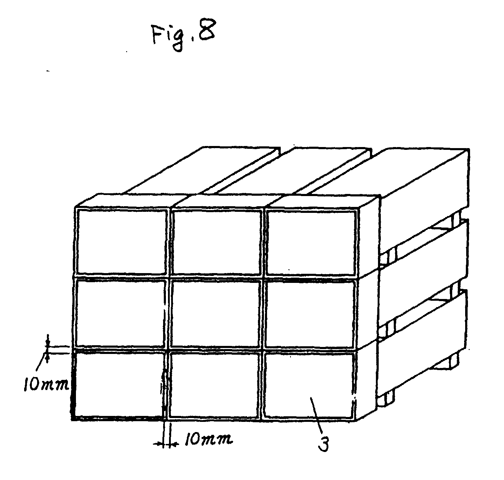

Fig. 7 shows screen holding of a conventional rear projection type television receiver. On the rear side of a screen 3, an image 66 is projected from a television receiver (not shown) incorporated in a cabinet 63. The screen 3 inserted in a lower groove 64 of the cabinet is held in the cabinet 63 by a screen holding frame 62 inserted in an upper groove 65 of the cabinet. Temperature rise during use and increase of ambient humidity will expand the screen 3. A gap 61 absorbs the expansion of the screen 3. If, for example, the screen 3 has a length of 900 mm, the length will be increased by about 3.5 mm by an expected increase of temperature and humidity. Therefore a length of 3.5 mm is required for the gap 61. As a result, as shown in the diagram, a width of about 5 mm is required for the rim of the screen. Fig. 8 shows a wide-screen display composed of nine rear projection type television receivers. Plural dark screen rims of about 10 mm in width crossing the screen surface are lowering the screen quality. It is hence an object of the invention to present a rear projection type television receiver decreased in the width of the rim around the screen in order to realize a wide screen of high picture quality.

In our earlier application EP-A-0623839 which was published after the printing date of the present application we disclosed a projection type television receiver in which the screen is maintained on the framework despite temperature changes or external force application, and also a large screen video display apparatus which displays video images with minimal loss of picture area, characterized by easy installation or removal of the screen holding frameworks and which is excellent in maintainability. A plurality of projection type television receivers are arranged in multiple rows and lines for the purpose of displaying a large screen video image. Each projection type television receiver comprises a permeable screen with a screening effect, a framework for holding the permeable screen, an elastic member one surface of which is fixed to the peripheral end part of the permeable screen and the other surface of which is fixed to the framework's holding part of the permeable screen, and which is readily deformable according to applied external force, and a cabinet having its opening installed within the framework.

The present invention provides a rear projection type television receiver comprising:
a cabinet having a built-in television receiver, said cabinet being rectangular in cross-section at its front face and having a front groove along its front edge,
a screen assembly comprising:
a screen,
a rectangular screen frame comprising screen holding plates elastically coupled with each side of the screen,
said screen assembly being coupled with the cabinet as the rectangular screen frame is fitted and inserted into the front groove of the cabinet, and
at least one fixing means for fixing the screen assembly, which has been fitted and inserted into the front groove of the cabinet, to the cabinet, characterised in that the fixing means for fixing the screen assembly to the cabinet comprises
a lock wedge slidably inserted to the edge portion of the screen from the front side perpendicularly to the screen,
a lock pin coupled to the cabinet, movably in the direction parallel to the screen, and not movably in the direction perpendicular to the screen, and
a dent formed in the screen frame,
wherein when the lock wedge is pushed in, the tip of the lock wedge pushes out the lock pin in the movable direction so that the lock pin holds the dent of the screen frame, resulting in the movement of the screen frame in the direction perpendicular to the screen being locked, thereby fixing the screen assembly to the cabinet.

In order that the present invention be more readily understood an embodiment thereof will now be described by way of example with reference to the accompanying drawings, in which:
Fig. 1 is a perspective exploded view of a rear projection type television receiver of the invention;
Fig. 2 is a perspective exploded view showing the constitution of a screen assembly;
Fig. 3 shows a completed shape of the screen assembly;
Fig. 4 is a sectional view of the screen holding of the rear projection type television receiver of the invention;
Fig. 5 shows a lock wedge used in fixing of the screen assembly to a cabinet;
Fig. 6(a), (b) show fixing of the screen assembly to the cabinet; and
Fig. 7 shows screen holding of a convention rear projection type television receiver.
Fig. 8 shows multiple rear projection type television receivers stacked up for making up a wide screen.

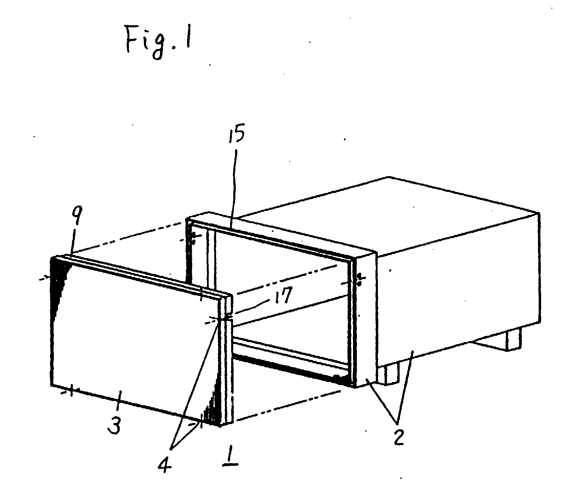

The rear projection type television receiver of the invention comprises, as shown in Fig. 1, a cabinet 2 incorporating a television receiver, and a screen assembly 1. The screen assembly 1 is fitted to the cabinet 2 by inserting a screen frame 9 into a rectangular groove 15 formed around on the front face of the cabinet, and is fixed to the cabinet 2 by fixing means 4 (see later). There are four fixing means 4 in Fig. 1. The screen assembly 1 can be detached from the cabinet 2 by unlocking the fixing means 4.

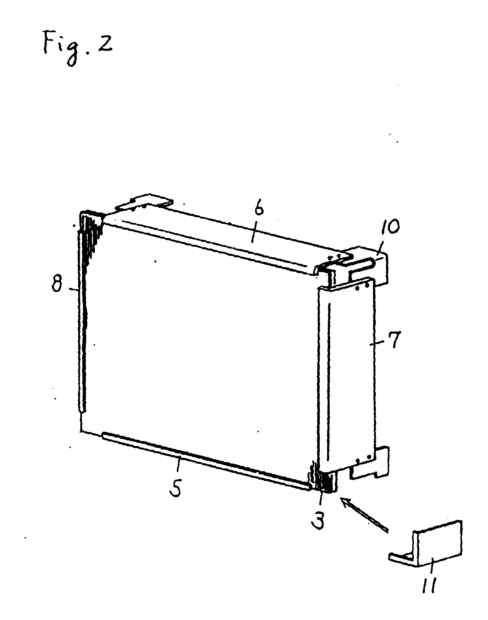

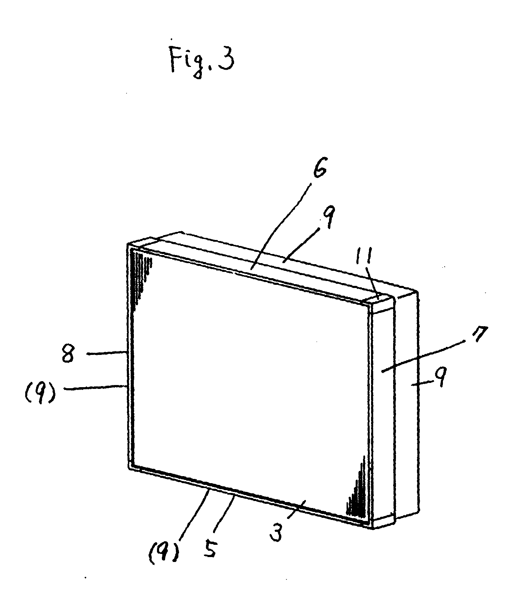

Fig. 2 and Fig. 3 show the constitution of the screen assembly 1. As shown in Fig. 2, screen holding plates 5, 6, 7, 8 are elastically adhered to each size of the screen 3, and coupled by coupling means 10. Corner plates 11 cover four corners so that projected light may not escape outside. The screen frame 9 is fitted in a rectangular form to the screen holding plates 5 to 8 and coupling means 10, and is shape in a rectangular form. Fig. 3 shows a completed shape of the screen assembly 1.

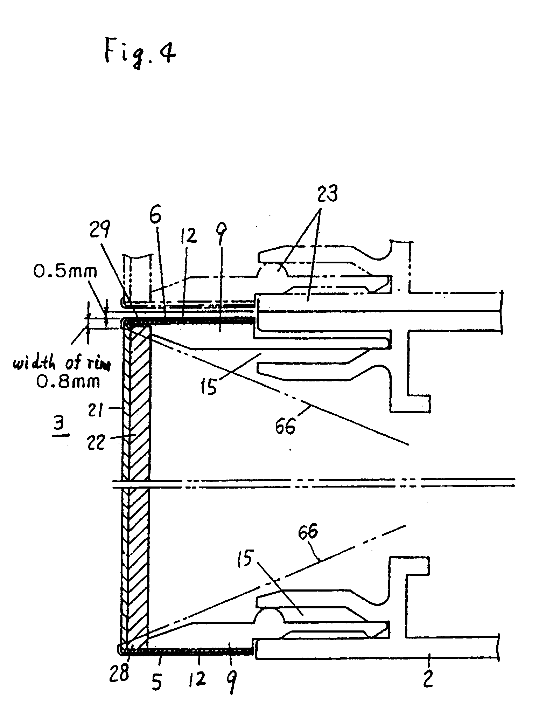

Fig. 4 shows a section of the rear projection type television receiver of the invention. The screen assembly 1 is fitted to the cabinet 2 by inserting the front end of the screen frame 9 into the front groove 15 of the cabinet. The screen assembly 1 is formed smaller than the cabinet 2, by 0.5 mm smaller in the drawing, so as not to interfere with other screen assembly when stacked up with other rear projection type television receiver.

The screen holding plates 5 to 8 (7, 8 are not shown) have a folded rim of short width. The difference in expansion of the screen holding plates and screen 3 is absorbed by the elasticity of an adhesive sheet 12, and holding of screen is enough with a rim of short width. The screen assembly 1 will not be destroyed by the difference in expansion.

Through the adhesive sheet 12, the bottom of the screen 3 and the screen frame 9 are adhered to the screen holding plate 5, the upper side of the screen 3 and the screen frame 9 are adhered to the screen holding plate 6, and, although not shown, the right side of the screen 3 and the screen frame 9 are adhered to the screen holding plate 7, and the left side of the screen 3 and the screen frame 9 are adhered to the screen holding plate 8. That is, the screen 3 is held between the screen rim and the screen frame 9 adhered to the screen holding plate 7.

When multiple rear projection type television receivers are stacked up in a rectangular form to make up a wide screen, it is preferred that each screen rim be aligned neatly vertically and horizontally. To realize this, the bottom of the screen 3 is tightly fitted and fixed to the cabinet 2 so as to maintain a precise relative position in the vertical and horizontal direction to the cabinet 2. The upper side, left side and right side of the screen 3 are loosely fitted so as to be free to move along with expansion of the screen 3. Because of this reason, in Fig. 4, the upper side screen frame 9 and right and left screen frames 9 (not shown) differ in shape from the lower side screen frame 9.

The screen 3 is composed of lamination of lenticular lens sheet 21 and Fresnel lens sheet 22 both made of acrylic resin. In most cases, the thickness of the lenticular lens sheet 21 is 0.5 to 1.5 mm, and the thickness of the Fresnel lens sheet 22 is 2 to 3 mm. Temperature rise and increase of ambient humidity cause to expand both lens sheets, but the lenticular lens sheet 21 expand more than the Fresnel lens sheet 22. Therefore, if the sides of both lens sheets are adhered to the screen holding plates 5 to 8, the screen 3 will be distorted, or broken in a worst case, due to changes in temperature and humidity. Such distortion must be avoided because the image is distorted. To avoid the distortion, in the invention, the Fresnel lens sheet 22 is adhered to the screen holding plate only on the bottom side, while all four sides of the lenticular lens sheet 21 are adhered to the screen holding plates. The other sides than the bottom side of the Fresnel lens sheet 22 are not adhered to the screen holding plates. It can be realized by setting the size of the Fresnel lens sheet 22 slightly smaller than the size of the lenticular lens sheet 21.

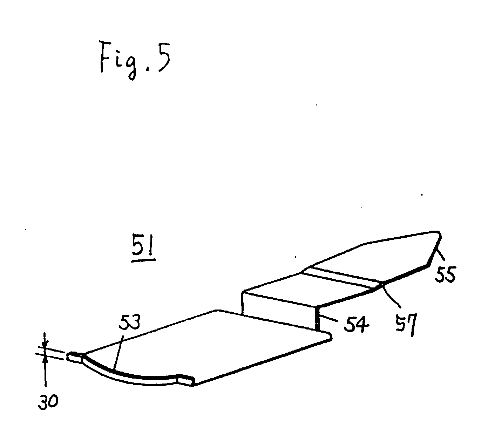

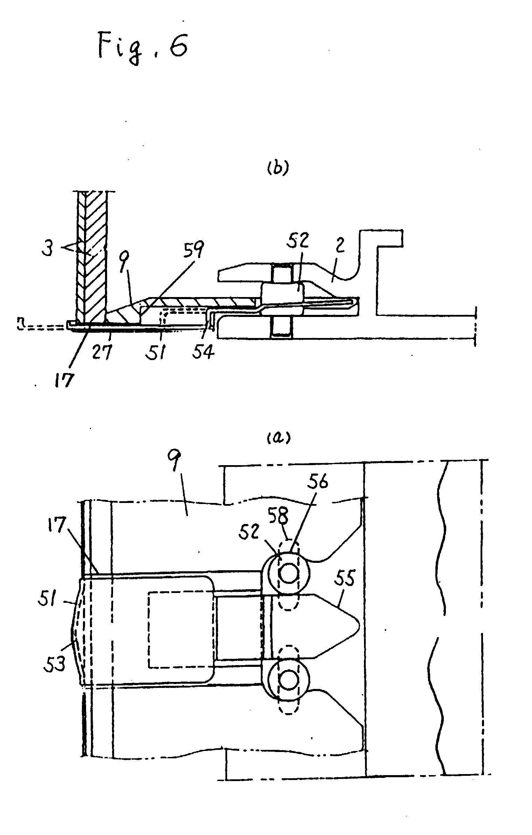

Next is explained the fixing means for fixing the screen assembly to the cabinet. Fig. 5 shows a lock wedge 51. The screen assembly is fixed to the cabinet by pushing in the lock wedge 51. To the contrary, the screen assembly is separated from the cabinet by drawing out the lock wedge 51. The lock wedge 51 fits into a groove 17 of the screen frame 9, and is movably put into the screen assembly 1. When the screen assembly 1 is fitted in the cabinet 2, the lock wedge 51 will be at the position indicated by broken line in Fig. 6 (b). Fixing of the screen 3 into the cabinet 2 is effected by pushing the lock wedge 51 into the cabinet 2 as shown in Fig. 6 (a), (b). As shown in Fig. 6 (a), the tapered end of the lock wedge 51 pushed in and on reaching the lock position expands the spacing between two lock pins 52 movable along a groove 58 of the cabinet 2, and each lock pin 52 is received in a dent 56 in the frame 9 so as to lock the screen frame 9. As a result, the screen 3 is fixed to the cabinet 2.

To separate the screen assembly 1 from the cabinet 2, the lock wedge 51 is drawn out. As shown in Fig. 5, the lock wedge 51 has a bulge 53, a shoulder 54, and a slope 57 with the bulge 53 being used when drawing out the screen assembly 1. The slope 57 provides the lock wedge 51 with an elasticity for preventing the lock wedge 51 from slipping off the lock position. As understood from Fig. 6 (b), when the lock wedge 51 is drawn out, the shoulder 54 engages with the end portion 59 of the screen frame 9. As a result, the screen assembly 1 is separated from the cabinet 2, together with the lock wedge 51, by drawing-out of the lock wedge 51.

## Claims

1. A rear projection type television receiver comprising:
a cabinet (2) having a built-in television receiver, said cabinet being rectangular in cross-section at its front face and having a front groove (15) along its front edge,
a screen assembly (1) comprising:
a screen (3),
a rectangular screen frame (9) comprising screen holding plates (5,6,7,8) elastically coupled with each side of the screen (3),
said screen assembly (1) being coupled with the cabinet (2) as the rectangular screen frame is fitted and inserted into the front groove of the cabinet, and
at least one fixing means for fixing the screen assembly (1), which has been fitted and inserted into the front groove (15) of the cabinet, to the cabinet, characterised in that the fixing means for fixing the screen assembly to the cabinet comprises
a lock wedge (51) slidably inserted to the edge portion of the screen from the front side perpendicularly to the screen,
a lock pin (52) coupled to the cabinet (2), movably in the direction parallel to the screen, and not movably in the direction perpendicular to the screen, and
a dent (56) formed in the screen frame (9),
wherein when the lock wedge (51) is pushed in, the tip of the lock wedge pushes out the lock pin (52) in the movable direction so that the lock pin holds the dent (56) of the screen frame, resulting in the movement of the screen frame in the direction perpendicular to the screen being locked, thereby fixing the screen assembly to the cabinet.

2. A rear projection type television receiver of claim 1, wherein the fitting of the screen frame (9) to the front groove of the cabinet (2) is tight at least in one side of the rectangle, and loose in the other sides.

3. A rear projection type television receiver of claim 1, wherein each of said screen holding plates (5,6,7,8) has a folded end and are coupled with each other in a rectangular form, and wherein each side of the screen is held between the folded end of the screen holding plate (5,6,7 and 8) and the front edge of the screen frame, and the front edge of the screen is covered with the folded ends of the screen holding plates.

4. A rear projection type television receiver of claim 1, wherein the screen is composed of lamination of lenticular lens sheet and Fresnel lens sheet, and the length of each side of the lenticular lens sheet is longer than the length of each corresponding side of the Fresnel lens sheet.

5. A rear projection type television receiver of claim 4, wherein each side of the lenticular lens sheet is coupled to the screen holding plate, and the Fresnel lens sheet is coupled to the screen holding plate only by one side.

6. A rear projection type television receiver of claim 1, wherein the base portion of the lock wedge has a folded portion which becomes a rim of a front face of the screen when the lock wedge is fully pushed in.

7. A rear projection type television receiver of claim 6, wherein the folded portion at the base portion of the lock wedge has a bulge (53) for assisting removal of the wedge.

8. A rear projection type television receiver of claim 1, wherein the lock wedge has a protruding or shoulder shaped portion (54) in the middle, and when the lock wedge (51) is pulled out to the outside, the protruding or shoulder shaped portion (54) of the lock wedge engages with the screen assembly, and thereby the screen assembly is separated from the cabinet by pulling-out of the lock wedge.

## Patentansprüche

1. Rückprojektions-Fernsehempfänger, der umfaßt:
ein Gehäuse (2) mit einem eingebauten Fernsehempfänger, wobei das Gehäuse an seiner Vorderseite rechteckigen Querschnitt hat und eine vordere Nut (15) entlang seiner Vorderkante aufweist,
eine Bildschirm-Baugruppe (1), die umfaßt:
einen Bildschirm (3),
einen rechteckigen Bildschirmrahmen (9), der Bildschirmhalteplatten (5, 6, 7, 8) umfaßt, die elastisch mit jeder Seite des Bildschirms (3) verbunden sind,
wobei die Bildschirm-Baugruppe (1) mit dem Gehäuse (2) verbunden wird, wenn der rechteckige Rahmen angebracht und in die vordere Nut des Gehäuses eingeführt wird, und
wenigstens eine Fixiereinrichtung zum Fixieren der Bildschirm-Baugruppe (1), die angebracht und in die vordere Nut (15) des Gehäuses eingeführt worden ist, an dem Gehäuse, **dadurch gekennzeichnet**, daß die Fixiereinrichtung zum Fixieren der Bildschirm-Baugruppe an dem Gehäuse umfaßt:
einen Arretierkeil (51), der verschiebbar an den Kantenabschnitt des Bildschirms von der Vorderseite aus senkrecht zu dem Bildschirm eingeführt wird,
einen Arretierbolzen (52), der mit dem Gehäuse (2) verbunden ist und in der Richtung parallel zum Bildschirm bewegt werden kann und in der Richtung senkrecht zum Bildschirm nicht bewegt werden kann, und
eine Einbeulung (56), die in dem Bildschirmrahmen (9) ausgebildet ist,
wobei, wenn der Arretierankeil (51) eingeschoben wird, das vordere Ende des Arretierkeils den Arretierbolzen (52) in der beweglichen Richtung herausdrückt, so daß der Arretierbolzen die Einbeulung (56) des Bildschirmrahmens hält, wodurch die Bewegung des Bildschirmrahmens in der Richtung senkrecht zum Bildschirm verhindert wird und so die Bildschirm-Baugruppe an dem Gehäuse fixiert wird.

2. Rückprojektions-Fernsehempfänger nach Anspruch 1, wobei der Bildschirmrahmen (9) an wenigstens einer Seite des Rechtecks fest in der vorderen Nut des Gehäuses (2) sitzt, und lose an den anderen Seiten.

3. Rückprojektions-Fernsehempfänger nach Anspruch 1, wobei jede der Bildschirmhalteplatten (5, 6, 7, 8) ein umgebogenes Ende aufweist und sie miteinander in rechteckiger Form verbunden sind, und wobei jede Seite des Bildschirms zwischen dem umgebogenen Ende der Bildschirmhalteplatte (5, 6, 7, 8) und der Vorderkante des Bildschirmrahmens gehalten wird, und die Vorderkante des Bildschirms von den umgebogenen Enden der Bildschirmhalteplatten abgedeckt ist.

4. Rückprojektions-Fernsehempfänger nach Anspruch 1, wobei der Bildschirm eine Schichtanordnung aus einer Rasterlinsen-Scheibe und einer Fresnel-Linsen-Scheibe ist, und jede Seite der Rasterlinsen-Scheibe länger ist als jede entsprechende Seite der Fresnel-Linsen-Scheibe.

5. Rückprojektions-Femsehempfänger nach Anspruch 4, wobei jede Seite der Rasterlinsen-Scheibe mit der Bildschirmhalteplatte verbunden ist, und die Fresnel-Linsen-Scheibe mit der Bildschirmhalteplatte nur an einer Seite verbunden ist.

6. Rückprojektions-Femsehempfänger nach Anspruch 1, wobei der Basisabschnitt des Arretierkeils einen umgebogenen Abschnitt aufweist, der ein Rand einer Vorderseite des Bildschirms wird, wenn der Arretierkeil vollständig eingeschoben ist.

7. Rückprojektions-Fernsehempfänger nach Anspruch 6, wobei der umgebogene Abschnitt am Basisabschnitt des Arretierkeils eine Ausbauchung (53) aufweist, die beim Herausnehmen des Keils unterstützend wirkt.

8. Rückprojektions-Fernsehempfänger nach Anspruch 1, wobei der Arretierkeil einen vorstehenden bzw. absatzförmigen Abschnitt (54) in der Mitte hat, und der vorstehende bzw. absatzförmige Abschnitt (54) des Arretierkeils, wenn der Arretierkeil (51) nach außen gezogen wird, mit der Bildschirm-Baugruppe in Kontakt kommt, so daß die Bildschirm-Baugruppe aus dem Gehäuse gelöst wird, indem der Arretierkeil herausgezogen wird.

## Revendications

1. Récepteur de télévision du type à projection par transparence, comprenant :
un coffret (2) contenant un récepteur de télévision incorporé, ledit coffret étant rectangulaire en section transversale au niveau de sa face avant et ayant une rainure frontale (15) le long de son bord frontal ;
un ensemble (1) formant écran comprenant :
un écran (3) ;
un cadre d'écran (9) rectangulaire comprenant des plaques (5, 6, 7, 8) de maintien d'écran accouplées élastiquement à chaque côté de l'écran (3) ;
ledit ensemble (1) formant écran étant raccordé au coffret (2) lorsque le cadre d'écran rectangulaire est monté et inséré dans la rainure frontale du coffret ; et
au moins un moyen de fixation destiné à fixer, sur le coffret, l'ensemble (1) formant écran, qui a été monté et inséré dans la rainure frontale (15) du coffret, caractérisé en ce que le moyen de fixation destiné à fixer l'ensemble formant écran au coffret comprend :
un coin (51) de verrouillage inséré de façon coulissante dans la partie bord de l'écran à partir du côté avant, perpendiculairement à l'écran ;
une broche (52) de verrouillage raccordée au coffret (2), mobile dans la direction parallèle à l'écran, et immobile dans la direction perpendiculaire à l'écran ; et
une indentation (56) formée dans le cadre (9) d'écran ;
dans lequel, lorsque l'on fait pénétrer le coin (51) de verrouillage, le bout du coin de verrouillage fait sortir la broche (52) de verrouillage dans la direction où elle est mobile de façon que la broche de verrouillage maintienne l'indentation (56) du cadre d'écran, ce dont il résulte que le déplacement du cadre d'écran dans la direction perpendiculaire à l'écran est verrouillé, en fixant ainsi, au coffret, l'ensemble formant écran.

2. Récepteur de télévision du type à projection par transparence selon la revendication 1, dans lequel le montage du cadre (9) d'écran dans la rainure frontale du coffret (2) est étroit au moins dans un côté du rectangle et lâche dans les autres côtés.

3. Récepteur de télévision du type à projection par transparence selon la revendication 1, dans lequel chacune desdites plaques (5, 6, 7, 8) de maintien d'écran comporte une extrémité repliée et est accouplée avec chacune des autres en une forme rectangulaire, et dans lequel chaque côté de l'écran est maintenu entre l'extrémité repliée de la plaque (5, 6, 7, et 8) de maintien d'écran et le bord avant du cadre d'écran, et le bord avant de l'écran est recouvert par les extrémités repliées des plaques de maintien d'écran.

4. Récepteur de télévision du type à projection par transparence selon la revendication 1, dans lequel l'écran est composé de la stratification d'une feuille de lentille lenticulaire et d'une feuille de lentille de Fresnel, et la longueur de chaque côté de la feuille de lentille lenticulaire et plus longue que la longueur de chaque côté correspondant de la feuille de lentille de Fresnel.

5. Récepteur de télévision du type à projection par transparence selon la revendication 4, dans lequel chaque côté de la feuille de lentille lenticulaire est accouplé à la plaque de maintien d'écran, et la feuille de lentille de Fresnel est accouplée à la plaque de maintien d'écran seulement par un côté.

6. Récepteur de télévision du type à projection par transparence selon la revendication 1, dans lequel la partie base du coin de verrouillage comporte une partie repliée qui devient une bordure d'une face avant de l'écran lorsque le coin de verrouillage est introduit à fond.

7. Récepteur de télévision du type à projection par transparence selon la revendication 6, dans lequel la partie repliée au niveau de la partie base du coin de verrouillage comporte un renflement (53) pour faciliter l'extraction du coin.

8. Récepteur de télévision du type à projection par transparence selon la revendication 1, dans lequel le coin de verrouillage comporte une partie (54) en saillie ou en forme d'épaulement, au milieu, et lorsque l'on extrait le coin (51) de verrouillage vers l'extérieur, la partie (54) en saillie ou en forme d'épaulement du coin coopère avec l'ensemble formant écran et, ainsi, l'ensemble formant écran se sépare du coffret par l'extraction du coin de verrouillage.
